(19)

Europäisches
Patentamt

European
Patent Office

Office européen
des brevets

(11)    **EP 3 115 571 A1**

(12)    **DEMANDE DE BREVET EUROPEEN**

(43) Date de publication:
    **11.01.2017   Bulletin 2017/02**

(21) Numéro de dépôt: **16176898.1**

(22) Date de dépôt: **29.06.2016**

(51) Int Cl.:
    *F02B 23/06* (2006.01)        *F02F 3/26* (2006.01)
    *F02B 31/08* (2006.01)        *F02B 3/06* (2006.01)
    *F02B 31/00* (2006.01)        *F02D 41/00* (2006.01)

(84) Etats contractants désignés:
    **AL AT BE BG CH CY CZ DE DK EE ES FI FR GB
    GR HR HU IE IS IT LI LT LU LV MC MK MT NL NO
    PL PT RO RS SE SI SK SM TR**
    Etats d'extension désignés:
    **BA ME**
    Etats de validation désignés:
    **MA MD**

(30) Priorité:   **09.07.2015   FR 1556530**

(71) Demandeur: **Peugeot Citroën Automobiles SA
    78140 Vélizy-Villacoublay (FR)**

(72) Inventeurs:
    • **DUMAND, Clement
      91300 MASSY (FR)**
    • **ENAUX, Benoit
      92120 MONTROUGE (FR)**
    • **AZADIGUIAN, Chahe
      75012 PARIS (FR)**
    • **BOISSARD, Romain
      78000 VERSAILLES (FR)**

(54)    **MOTEUR DIESEL À PISTON À BOL OUVERT À RENDEMENT OPTIMISÉ**

(57)    L'invention concerne un moteur Diesel comprenant une chambre de combustion, un cylindre, un piston, un injecteur, le piston portant une cavité centrale formant un bol (5), le moteur étant muni d'un système de création de tourbillons d'air dans la chambre, caractérisé en ce que :
- le bol (5) est un bol ouvert avec une paroi interne (6) se décomposant en une première partie (6') formant le fond du bol et une seconde partie (6") adjacente au fond du bol et formant une paroi latérale qui s'étend du fond du bol à l'ouverture du bol (5) du piston, cette seconde partie (6") élargissant progressivement la cavité à mesure que l'on se rapproche de l'ouverture (5a) du bol (5),
- le nombre de tourbillon est compris entre 2 et 6,
- l'injecteur comprend entre 6 et 9 trous.

Figure 3

EP 3 115 571 A1

**Description**

L'invention porte sur un moteur Diesel à piston présentant un bol ouvert, un injecteur haute pression et un système de création de tourbillons dans une chambre de combustion, ce moteur étant à rendement optimisé en ce qui concerne notamment la combustion à l'intérieur du moteur relativement à des critères de consommation de carburant Diesel et d'émissions polluantes.

De manière classique, les moteurs Diesel à combustion interne comprennent au moins une chambre de combustion délimitée par une culasse, un cylindre et un piston. La culasse porte une entrée d'admission d'air et un injecteur.

Tous les moteurs Diesel modernes pour les véhicules automobiles, aussi bien les véhicules légers que les véhicules poids lourds, utilisent la technologie d'injection haute pression, avec une pression avantageusement comprise entre 500 et 2.500 bars associée à un taux de compression élevé, avantageusement entre 14 et 20.

L'injection de carburant Diesel se fait par l'injecteur comprenant un nombre défini de trous d'injection vers et dans un bol. Ce bol est porté par une face du piston mobile en translation à l'intérieur du cylindre le long d'un axe central de la chambre de combustion entre un point mort bas et un point mort haut, ce piston servant à l'entraînement en rotation d'un vilebrequin. Il est en effet fréquent que le piston porte sur une face tournée vers l'injecteur une cavité centrale formant un bol, la cavité ayant été préalablement usinée sur la face du piston qui le porte.

Lorsque le piston est au voisinage du point mort haut, l'injecteur, avantageusement placé au centre sur une face ou un bord de la chambre de combustion, va envoyer plusieurs jets de carburant radialement vers et dans le bol. Le volume de ce bol est donc à prendre en considération pour le calcul du volume mort, c'est-à-dire le volume total de la chambre quand le piston est au point mort haut et à la détermination du taux de compression.

Il peut être avantageux de créer une aérodynamique comportant des échelles macroscopiques ordonnées à l'intérieur de la chambre de combustion au moins à des instants spécifiques de la course du piston entre le point mort bas et le point mort haut. Ceci peut être obtenu par l'élaboration de formes spécifiques pour les conduits d'admission ainsi que de la forme du piston et du bol porté par le piston. La principale échelle macroscopique dite ordonnée car volontairement créée, aussi dénommée écoulement tourbillonnaire, est connue sous l'appellation anglo-saxonne de « swirl » et sera ci-après désignée sous le nom de tourbillon.

La création de tourbillons dans une chambre de combustion d'un moteur est par exemple connue du document FR-A-2 926 849 qui recherche une augmentation du rendement thermique du moteur.

De tels tourbillons présentent un axe de rotation sensiblement aligné avec l'axe de la chambre de combustion. Il peut être ainsi défini un nombre de tourbillon, aussi connu sous l'appellation franco-anglaise de « nombre de swirl », Sw, qui est le rapport d'une vitesse de rotation de l'air autour de l'axe central d'une chambre lorsque son piston associé est à un point mort bas, PMB, sur une vitesse de rotation, N, du vilebrequin entraîné par le piston de chaque chambre de combustion :

$$Sw = \frac{Vitesse\ de\ rotation\ au\ PMB}{N}$$

Expérimentalement, le nombre de tourbillon, Sw, est calculé grâce à la mesure du couple généré par l'air traversant un disque en nid d'abeille placé dans la section du cylindre, lorsque l'on applique entre l'admission et le cylindre une différence de pression.

Pour la suite de ce mémoire, le nombre de tourbillon, Sw, est déterminé en déterminant tout d'abord un coefficient de tourbillon aussi connu sous l'appellation franco-anglaise de « coefficient de swirl », $C_s$ :

$$Cs = \frac{C_{nida}.\pi.A.\rho_s}{Q_m^2}$$

Où $C_{nida}$, désigne le couple de l'air sur le nid d'abeille mesuré (N.m), A désigne l'alésage du cylindre (m), $\rho_s$ la masse volumique de l'air à la soupape (kg/m$^3$), $Q_m$ désigne le débit d'air massique (kg/s). On mesure de débit $Q_m$ et le coefficient de tourbillon, $C_s$, pour des levées de soupape de 1mm jusqu'à la levée maximum de la soupape, en appliquant entre l'admission et le cylindre une différence de pression de 100mbar.

Le nombre de tourbillon, Sw, est ensuite donné par la relation :

$$Sw = \frac{C}{2.A}\int_0^{180°}sin^2\theta.C_s(\theta)d\theta$$

Avec C la course du piston (m), θ l'angle vilebrequin. Le résultat dépend de la loi de levée et de son calage donne la levée de la soupape en fonction de θ, ce qui permet de faire le lien entre les coefficients de tourbillon $C_s$ mesurés pour une levée de soupape donnée et $C_s(\theta)$.

Le choix des principaux paramètres de conception d'un système de combustion Diesel, notamment le nombre de tourbillon, le nombre de trous d'injection, le taux de compression, les paramètres du bol et la pression d'injection maximale, est le résultat de compromis globaux sur la consommation, le bruit, le démarrage à froid, les émissions polluantes, la courbe de couple maximal, etc.

La plupart des moteurs Diesel de véhicules légers donc à faible alésage utilisent des pistons à bol dit fermé. Ces bols dits fermés ont une zone de réentrant qui est en interaction avec les jets d'injection au niveau de l'impact du jet sur le piston, autrement connu sous la dénomination IJP. Cette zone de réentrant permet de répartir le carburant entre une zone de chasse, intercalée entre le piston et une culasse du moteur, et le bol du piston de façon à maximiser l'utilisation de l'air ayant pénétré dans la chambre de combustion.

Les moteurs à plus fort alésage, comme les moteurs de poids lourds, utilisent plus communément des bols dits ouverts limitant l'interaction des jets avec la paroi interne. En réduisant cette interaction jet/paroi, les transferts thermiques sont réduits et l'efficacité du moteur est améliorée.

Pour la plupart des moteurs Diesel, le nombre de tourbillon est fixé à une valeur d'environ 2. Néanmoins, il est connu de l'état de la technique des moteurs Diesel à tourbillons variables qui permettent d'adapter le nombre de tourbillon à des points de fonctionnement du moteur. Par exemple, il est connu de faire varier le nombre de tourbillon entre 2 et 6.

En augmentant le nombre de tourbillon, le mélange entre l'air et le carburant est amélioré et les émissions de suies sont réduites. A contrario, la vitesse de l'air à la paroi interne du bol est augmentée de même que les transferts thermiques pénalisant ainsi le rendement du moteur.

Il a aussi été proposé l'utilisation d'un grand nombre de trous d'injection de carburant combinée avec la création d'un faible tourbillon ordonné et un bol de piston ouvert. Il a été démontré que cette proposition de l'état de la technique permet d'améliorer le rendement du système de combustion de 3 à 5% par rapport à un bol de moteur de référence, c'est-à-dire 8 trous d'injection, un nombre de tourbillon de 2, le bol étant du type bol fermé. Cette amélioration est principalement due à une réduction des pertes thermiques.

Dans ce cas, les transferts thermiques sont en effet réduits pour plusieurs raisons. La première raison est que la surface d'un bol ouvert de piston est plus faible que celle d'un piston avec réentrant. La deuxième raison est que les vitesses des gaz à la paroi interne du bol sont aussi faibles grâce au nombre de tourbillon faible, par exemple de l'ordre de 0,3. La troisième raison est une réduction de l'impact entre les jets en combustion et la paroi interne du bol du piston obtenue en augmentant le nombre de trous d'injection tout en adaptant la pression d'injection et par la même la pénétration des jets dans la chambre de combustion.

Le désavantage de cette proposition de l'état de la technique, au-delà des difficultés inhérentes à sa conception, dont la réalisation et la tenue mécanique d'un injecteur à fort nombre de trous, est qu'il va naturellement être produit beaucoup de suies. En effet, le faible niveau de tourbillon va limiter le mélange dans la chambre de combustion. Le défaut de mélange peut créer des zones de sur-richesse, sources de suies, et limiter le mélange entre l'air frais et les gaz brûlés lors de la détente, à l'origine de la post-oxydation des suies.

Une proposition telle que précédemment décrite, ainsi que la conception adoptée pour les moteurs à fort alésage suggèrent qu'il est possible d'améliorer le rendement des moteurs Diesel en réduisant les transferts thermiques avec des gains associés en consommation compris entre 3 et 5%. Néanmoins, une telle proposition n'est pas réaliste compte tenu des contraintes organiques liées à la technologie d'un injecteur à fort nombre de trous et à des niveaux de suies élevés. Les concepts de création de tourbillons à aérodynamique variable permettent de réduire les niveaux de suies pour des forts niveaux de tourbillon, ceci au détriment des transferts thermiques et de la consommation.

Par conséquent, le problème à la base de l'invention est de concevoir une nouvelle architecture de moteur favorisant le rendement du moteur.

Pour atteindre cet objectif, il est prévu selon l'invention un moteur à combustion interne Diesel comprenant au moins une chambre de combustion délimitée par une culasse, un cylindre et un piston, la culasse portant une entrée d'admission d'air et un injecteur avec au moins deux trous injectant chacun un jet de carburant Diesel dans la chambre, le piston étant mobile en translation à l'intérieur du cylindre le long d'un axe central de la chambre pour l'entraînement en rotation d'un vilebrequin et portant sur une face tournée vers l'injecteur une cavité centrale formant un bol, le moteur étant muni d'un système de création de tourbillons d'air dans la chambre, un nombre de tourbillon étant défini par le rapport d'une vitesse de rotation de l'air autour de l'axe central de la chambre sur une vitesse de rotation du vilebrequin, caractérisé en ce que :

- le bol est un bol ouvert avec une paroi interne se décomposant en une première partie formant le fond du bol et une seconde partie adjacente au fond du bol et formant une paroi latérale qui s'étend du fond du bol à l'ouverture du bol du piston, cette seconde partie élargissant progressivement la cavité à mesure que l'on se rapproche de l'ouverture du bol,
- le nombre de tourbillon est compris entre 2 et 6,
- l'injecteur comprend entre 6 et 9 trous.

L'effet technique obtenu avec un tel moteur de par sa conception et ses réglages est une réduction des pertes thermiques en son intérieur et une augmentation de son rendement sur au moins des points spécifiques de fonctionnement du moteur, sinon tous les points de fonctionnement du moteur dans certains modes de réalisation de l'invention, tout cela en étant adaptable sur des systèmes de combustion Diesel conventionnels.

L'invention permet également d'améliorer le compromis $NO_x$/suies, la formule $NO_x$ désignant les oxydes d'azote et étant utilisée par la suite pour qualifier les oxydes d'azote. Elle permet aussi d'augmenter la température des gaz à l'échappement pour réduire les émissions polluantes et, dans le cas notamment d'un fonctionnement du moteur suivant un démarrage du véhicule automobile, de réduire le temps d'amorçage des systèmes de post-traitement ou même de faciliter des régénérations d'un élément de dépollution présent dans le système d'échappement relié au moteur, cet élément étant par exemple un filtre à particules.

En effet, l'invention permet de réduire les pertes thermiques et d'augmenter le rendement du moteur Diesel tout en améliorant le compromis $NO_x$/suies, représentatif d'une réduction simultanée des émissions de suies et de $NO_x$. Cette réduction de transferts thermiques dans la chambre de combustion, due notamment à la forme ouverte du bol, permet également d'augmenter la température des gaz d'échappement et donc des éléments de post-traitement des gaz d'échappement ou éléments de dépollution pour un meilleur fonctionnement de ces éléments.

Diverses caractéristiques supplémentaires peuvent être prévues, seules ou en combinaisons :

Dans une variante, le rapport de la profondeur du bol sur le diamètre du piston est compris entre 0,1 et 0,15, de préférence entre 0,11 et 0,14.

Dans une variante, le rapport du diamètre de l'ouverture du bol sur le diamètre du piston est compris entre 0,8 et 0,95, de préférence entre 0,88 et 0,9.

Dans une variante, la seconde partie de la paroi interne 6 comprend, en partant du fond du bol une première pente droite suivie d'une seconde pente droite.

Dans une variante, la première pente droite est comprise entre 19° et 48° tandis que la seconde pente droite est comprise entre 23° et 32°.

Dans une variante, le fond du bol comprend un téton central.

Avantageusement, le système de création de tourbillons est choisi parmi les systèmes suivants pris individuellement ou en combinaison:

- un système comportant un ou des volets obturant tout ou une partie d'un conduit d'admission d'air,
- un système comportant un double répartiteur d'air et au moins un volet obturant l'un des deux répartiteurs,
- un système utilisant la distribution moteur avec des première et seconde soupapes d'admission et une soupape d'échappement dans ladite au moins une chambre de combustion, un premier arbre à cames portant la première soupape d'admission et la soupape d'échappement et un second arbre à cames portant la seconde soupape d'admission avec des moyens de réglage de la commande d'ouverture et/ou de fermeture de la première soupape d'admission et de la soupape d'échappement portées par le premier arbre à cames par rapport à la commande d'ouverture et/ou de fermeture de la seconde soupape d'admission portée par le second arbre à cames.

Avantageusement, le système de création de tourbillons d'air est un système variable comprenant un dispositif de pilotage créant des tourbillons d'air spécifiques à des points de fonctionnement du moteur.

Avantageusement, le dispositif de pilotage est connecté à une unité de contrôle moteur pour la détermination des points de fonctionnement du moteur.

Avantageusement, pour un point de fonctionnement du moteur correspondant à un point de charge partielle avec une pression effective moyenne de l'ordre de 8,2 bars et un régime moteur aux environs de 2.280 tr/min avec un injecteur comprenant 8 trous, le nombre de tourbillon créé par le système de création de tourbillons variable est d'environ 4,5.

Avantageusement, pour un point de fonctionnement du moteur correspondant à un point de pleine charge, avec une pression effective moyenne de l'ordre de 20 bars, le nombre de tourbillon est d'environ 2.

Avantageusement, le moteur comprend un moyen d'obturation ou d'ouverture d'au moins un trou d'injection le rendant inopérant ou actif à des points spécifiques de fonctionnement du moteur.

Avantageusement, le système de création de tourbillons d'air est fixe avec un nombre de tourbillon constant pour tous les points de fonctionnement du moteur, ce nombre étant d'environ 4.

Avantageusement, la pression d'injection pour chaque trou de l'injecteur peut être supérieure à la pression courante d'injection, de l'ordre de 1800 bars, tout en étant inférieure ou égale à une pression maximale pour laquelle la surface des zones de la paroi interne du bol impactées par les jets et atteignant une température de l'ordre de 1500°K est augmentée de 20 à 30% par rapport à la surface des zones du bol atteignant la même température de l'ordre de 1500°K avec une pression courante d'injection.

L'invention concerne aussi un groupe motopropulseur comprenant un système d'admission d'air, un système d'échappement muni d'au moins un élément de dépollution des gaz d'échappement et une ligne de recirculation des gaz d'échappement vers le système d'admission d'air, caractérisé en ce qu'il comprend un tel moteur.

D'autres caractéristiques, buts et avantages de la présente invention apparaîtront à la lecture de la description détaillée qui va suivre et au regard des dessins annexés donnés à titre d'exemples non limitatifs et sur lesquels :

- la figure 1 est une représentation schématique d'une coupe partielle d'une chambre de combustion montrant notamment un piston présentant un bol sensiblement fermé, un tel bol étant selon l'état de la technique,
- la figure 2 est une représentation schématique d'une vue d'un moteur à combustion interne avec des portions d'un système d'admission d'air et d'un système d'échappement qui lui sont directement adjacentes, le système d'admission d'air présentant un mode de réalisation d'un système de création de tourbillons pouvant servir pour le moteur selon la présente invention,

- les figures 3 à 5 montrent des coupes de bol ouvert pouvant être utilisé dans des modes de réalisation respectifs de la présente invention,
- la figure 6 montre un bol ouvert avec des zones de la paroi impactées par les jets de carburant qui atteignent des températures élevées et des zones adjacentes présentant des température moins élevées, ce bol ouvert pouvant être utilisé dans des modes de réalisation de la présente invention,
- la figure 7 montre dans deux directions orthogonales les jets limites d'injection ainsi qu'un jet médian en pointillés sur respectivement à titre de comparaison un profil de bol fermé et un profil de bol ouvert, le bol ouvert pouvant être utilisé dans des modes de réalisation de la présente invention.
- La figure 8 présente une simulation d'écart de performance entre une chambre à combustion dotée d'un piston du type de celui de la figure 1 et une chambre à combustion dotée d'un piston de l'invention, pour une même quantité de carburant injecté dans la chambre.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différents éléments illustrés ne sont pas représentatives de la réalité.

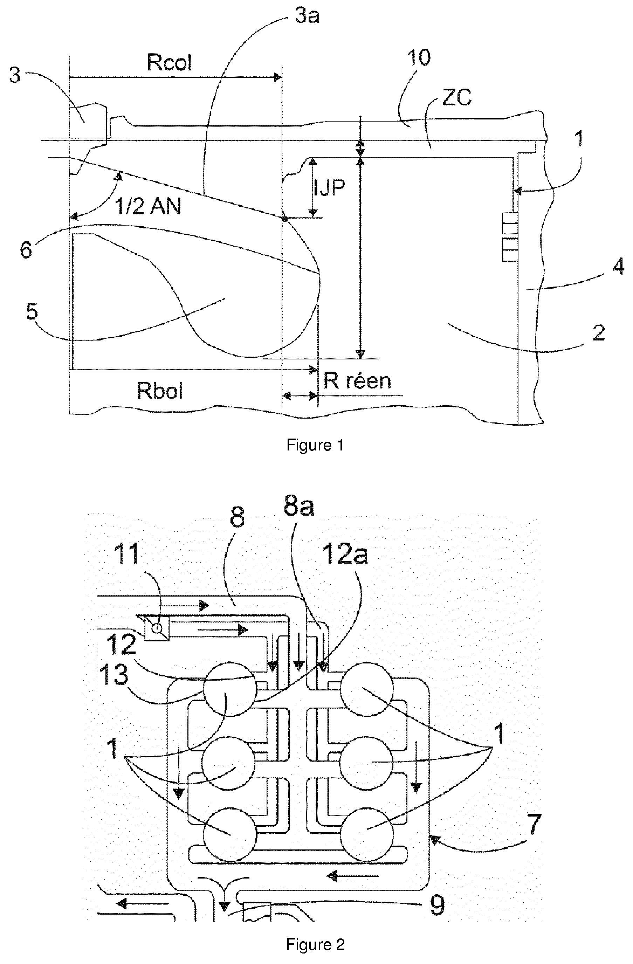

En se référant à toutes les figures et plus particulièrement à la figure 1, bien que celle-ci ne montre pas un bol pouvant être utilisé dans le moteur selon la présente invention, un moteur à combustion interne Diesel, référencé 7 à la figure 2, comprend au moins une chambre 1 de combustion délimitée par une culasse 10, un cylindre 4, visible par sa chemise à la figure 1, et un piston 2.

La culasse 10 porte une entrée d'admission d'air et un injecteur 3 avec au moins deux trous injectant chacun un jet 3a de carburant Diesel dans la chambre 1. Une bougie d'allumage présente dans la chambre 1 de combustion provoque la combustion de l'air ayant été admis par l'entrée d'admission mélangé à du carburant. A la figure 1, un seul trou d'injection est représenté. Le jet 3a est incliné par rapport à la verticale d'un demi-angle de nappe 1/2AN. Il peut aussi être défini une distance par laquelle le trou d'injection fait saillie d'un nez de l'injecteur 3.

De manière classique, le piston 2 est mobile en translation à l'intérieur du cylindre 4 le long d'un axe central de la chambre 1 pour l'entraînement en rotation d'un vilebrequin, non montré aux figures. Entre la culasse 10 et le piston 2 dans sa position la plus proche de la culasse 10 subsiste une zone libre dite zone de chasse ZC. De plus, le piston 2 porte sur une face tournée vers l'injecteur

3 une cavité centrale formant un bol 5.

A la figure 1, le bol 5 est qualifié de bol sensiblement fermé en présentant une paroi interne 6 présentant une zone réentrante positionnée vers sa portion distale ou col. Cette zone réentrante fait saillie vers l'intérieur de la cavité de section sensiblement circulaire. De ce fait, le rayon d'ouverture du bol 5 vers la mi-hauteur de la paroi interne, ce rayon étant référencé par Rbol à la figure 1, est plus grand que le rayon d'ouverture du bol dans la zone réentrante Rcol disposée vers son extrémité distale qui est diminué d'une longueur réentrante ou R réen par rapport à Rbol.

Il est défini une distance IJP ou distance d'impact du jet sur le piston 2 et notamment sur son bol 5, entre la portion supérieure du bol 5 la plus proche de la culasse 10 et la zone d'impact du jet 3a sur le bol 5, à la figure 1 dans la zone réentrante.

En se référant toujours aux figures 1 à 7 et plus particulièrement à la figure 2, le moteur 7 est muni d'un système de création 11 de tourbillons d'air dans la chambre 1. Ce système de création 11 de tourbillons d'air dans la chambre 1 est disposé dans le conduit d'admission d'air et provoque un écoulement tourbillonnaire suivant l'axe du conduit, cet écoulement provoquant des tourbillons ordonnés dans la chambre 1 comme précédemment mentionné dans la partie introductive de la présente demande. Il est ainsi défini un nombre de tourbillon qui est le rapport d'une vitesse de rotation de l'air autour de l'axe central de la chambre 1 sur une vitesse de rotation du vilebrequin.

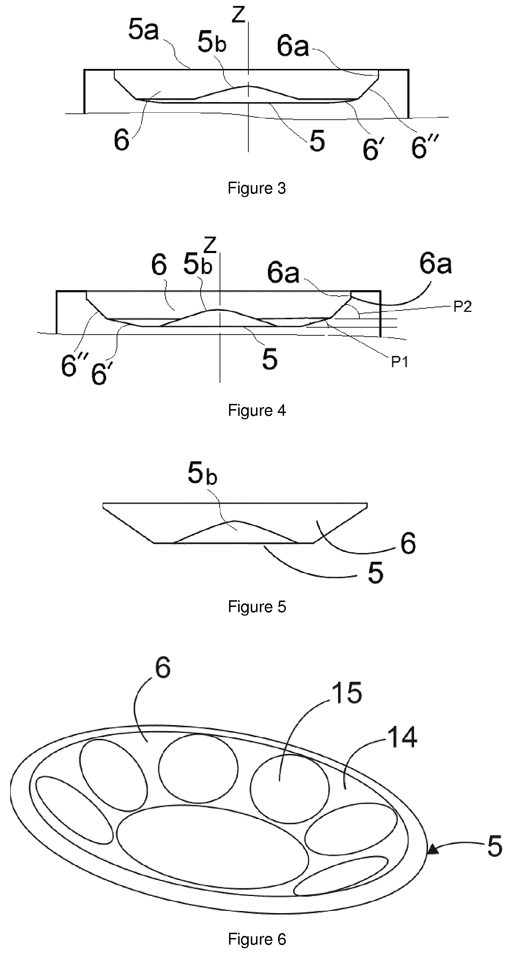

En se référant plus particulièrement aux figures 3 à 6, selon la présente invention, le bol 5 est un bol ouvert avec une ouverture 5a et une paroi interne 6 divergente de la cavité s'écartant en rapprochement de l'injecteur 3. Un tel bol 5 ouvert est différent de celui montré à la figure 1 qui s'apparente à un bol fermé et un bol 5 ouvert peut prendre les formes de bol montrées aux figures 3 à 6 sans que cela soit limitatif. Comme illustré en figure 3 et 4, la paroi interne 6 se décompose en deux parties : une première partie 6' formant le fond du bol 5 et une seconde partie 6" adjacente au fond du bol formant la paroi latérale qui s'étend du fond du bol à l'ouverture 5a du bol du piston.

Pour ces figures, la seconde partie 6" formant la paroi latérale de la paroi interne 6 diverge en élargissant la cavité qu'elle limite plus on se rapproche de l'injecteur c'est-à-dire plus on se rapproche de l'extrémité distale ou l'ouverture du bol 5.

Comme illustré en figure 4, cette seconde partie 6" de la paroi interne 6 peut comprendre, en partant du fond du bol, une première pente droite P1 suivie d'une seconde pente droite P2. Le raccord entre le fond bu bol et la pente P1 peut être arrondi. Le raccord entre les pentes P1 et P2 peut être arrondi.

De préférence, la première pente droite P1 est comprise entre 19° et 48° tandis que la seconde pente droite P2 est comprise entre 23° et 32°. La différence P1-P2 entre les deux pentes peut être positive ou négative. Les angles P1, P2 sont défini relativement à un plan orthogonal à l'axe central Z du piston, 0° correspondant à une pente parallèle à ce plan et 90° à une pente parallèle à l'axe central et perpendiculaire à ce plan. A titre de comparaison, dans ce référentiel un réentrant comme à la figure 1 se traduirait localement par une pente supérieure à 90°.

Comme montré à la figure 5, les deux pentes peuvent être identiques, dans ce cas on est sur une pente unique comprise entre dans l'intervalle commun aux deux pentes P1, P2 c'est-à-dire entre 23° et 32°.

Le bol est tel que le rapport diamètre de l'ouverture 5a du bol sur diamètre du piston est compris entre 0,8 et 0,95 et de préférence entre 0,88 et 0,9.

Le bol est tel que le rapport profondeur du bol sur le diamètre du piston est compris entre 0,1 et 0,15 et de préférence entre 0,11 et 0,14.

Il peut être possible que la paroi interne 6 comprenne un col 6a entourant son extrémité distale ou ouverture.

Le fond du bol peut comprendre un téton central 5b pour réduire le volume de la cavité.

Toujours selon la présente invention, le nombre de tourbillon, défini comme précédemment indiqué est compris entre 2 et 6. Dans ce cas, le système de création 11 de tourbillons d'air peut être configuré et avantageusement piloté pour maintenir un nombre de tourbillon compris entre 2 et 6. Enfin, selon l'invention, l'injecteur 3 comprend entre 6 et 9 trous. L'angle de nappe de l'injecteur est autour de 152°, +/- 5°.

Ainsi, la présente invention consiste en l'utilisation conjuguée d'un bol de piston ouvert, d'un système de créations de tourbillon, avantageusement à aérodynamique variable, se traduisant par un nombre de tourbillon entre 2 et 6 et d'un injecteur portant un nombre de trous compris entre 6 et 9. La pression d'injection à l'injecteur 3 peut être maintenue inférieure à une valeur usuelle de l'ordre de 1.500 à 1.800 bars ou légèrement augmentée, comme il sera détaillé par la suite. Ceci permet d'exploiter des gains observés dans la catégorie des moteurs à fort alésage tels que ceux des poids lourds.

Les bols 5 ouverts, tels que représentés aux figures 3 à 6, permettent de réduire les transferts thermiques. D'une part, ce type de bol offre une surface plus faible de contact avec les gaz brûlés lors de la détente, ce qui se traduit par une réduction d'environ 17% de sa surface. D'autre part, ces bols 5 ouverts offrent un parcours plus long aux jets avant de rencontrer la paroi interne 6 des bols, ces bols 5 ne présentant pas de zone réentrante comme il a été montré pour le bol fermé illustré à la figure 1.

En limitant l'interaction entre les jets en combustion et la paroi interne 6 du bol 5, les transferts thermiques sont significativement réduits. Cet effet est renforcé avec les forts niveaux de tourbillon. Le tourbillon va dévier les jets et augmenter le mélange entre l'air et les jets, limitant ainsi l'impact des jets en combustion avec la paroi interne 6 du bol 5.

Les paramètres de forme de bol ouvert, par exemple mais pas uniquement ceux des zones du bol pouvant être impactées par les jets et qui peuvent former un bandeau sur l'intérieur de la paroi interne 6 du bol 5, peuvent varier pour des bols ouverts convenant néanmoins pour un moteur selon la présente invention. Ces paramètres peuvent quantifier respectivement la profondeur, la largeur, l'angle d'inclinaison de la paroi, les zones susceptibles d'être impactées par les jets, les dimensions de ces zones formant avantageusement un bandeau, etc. La distance entre trous d'injection de l'injecteur et leur nombre peuvent aussi avoir un impact sur les transferts thermiques.

Les zones susceptibles d'être impactées formant avantageusement un bandeau tout autour de la paroi interne 6 du bol comportent des zones fortement impactées par les jets dont la température dépasse une température maximale prédéterminée, par exemple 1.500°K et des zones faiblement impactées de plus basse température. Sans que cela soit limitatif, pour caractériser des bols 5 ouverts convenant plus particulièrement à un moteur selon la présente invention, il peut être défini un rapport entre la surface des zones fortement impactées et la surface totale du bandeau.

Pour des bols ouverts particulièrement bien adaptés à la limitation des transferts thermiques et donc convenant à une utilisation dans le moteur selon la présente invention, ces bols ouverts peuvent être définis comme réduisant les zones fortement impactées par les jets des trous de l'injecteur et atteignant des températures prédéterminées maximales admissibles, par exemple une température de 1500°K, de 20 à 30 % par rapport à un bol fermé de l'état de la technique.

Dans le moteur selon l'invention, le système d'injection, spécifiquement l'injecteur, est le même que celui d'un moteur de référence avec un injecteur similaire, présentant cependant un nombre de trous d'injection réduit, compris entre 6 et 9. L'angle de jet est d'environ 154°. Les pressions d'injection peuvent être elles aussi standards, inférieures à 2000 bars, avantageusement 1800 bars. Dans un mode de réalisation de la présente invention, il peut être possible d'utiliser des pressions d'injection plus élevées sous réserve de ne pas trop augmenter les transferts thermiques sur les parois du bol 5. Ceci sera détaillé plus précisément ultérieurement.

Il existe déjà des systèmes permettant de faire varier la création de tourbillons dans les moteurs Diesel. Le système de création 11 de tourbillons peut être choisi parmi les systèmes suivants pris individuellement ou en combinaison:

- un système comportant un ou des volets obturant tout ou une partie d'un conduit d'admission d'air,
- un système comportant un double répartiteur d'air et au moins un volet obturant l'un des deux répartiteurs,
- un système utilisant la distribution moteur.

La figure 2 illustre un moteur 7 présentant 6 chambres de combustion 1 avec un exemple d'un système de création de tourbillons utilisant la distribution du moteur. Le moteur 7 présente un système d'admission d'air à deux conduits 8, 8a se séparant en entrée du moteur, le second conduit 8a intégrant un dispositif de création 11 de tourbillons. Le moteur 7 comprend aussi un système d'échappement des gaz issus de la combustion dans les chambres 1 du moteur, ce système d'échappement comprenant un conduit d'échappement 9.

Dans cette forme de réalisation, chaque cylindre associé à une chambre 1 de combustion comprend des première et seconde soupapes d'admission 12, 12a et une ou deux soupapes d'échappement 13. Les soupapes d'admission 12, 12a et la ou les deux soupapes d'échappement 13 sont référencées pour une seule chambre 1 de combustion à la figure 2 mais ces références sont valables pour toutes les chambres 1.

Pour toutes les chambres 1 de combustion, un premier arbre à cames porte la première soupape d'admission 12 et la soupape d'échappement 13 et un second arbre à cames porte la seconde soupape d'admission 12a. La distribution du moteur 7 est munie de moyens de réglage de la commande d'ouverture et/ou de fermeture de la première soupape d'admission 12 et de la soupape d'échappement 13 portées par le premier arbre à cames par rapport à la commande d'ouverture et/ou de fermeture de la seconde soupape d'admission 12a portée par le second arbre à cames. Des tourbillons sont alors séquentiellement créés dans les chambres 1 de combustion. Ce mode de réalisation n'est cependant pas limitatif.

Selon un premier mode de réalisation de la présente invention, le système de création 11 de tourbillons d'air est un système variable, aussi appelé à aérodynamique variable, comprenant un dispositif de pilotage créant des tourbillons d'air spécifiques à des points de fonctionnement du moteur 7. Selon un deuxième mode de réalisation de la présente invention, le système de création 11 de tourbillons d'air est fixe avec un nombre de tourbillon constant pour tous les points de fonctionnement du moteur 7, ce nombre étant d'environ 4.

Des exemples de points de fonctionnement du moteur avec obtention d'un nombre de tourbillon avantageux pour la mise en oeuvre du premier mode de réalisation de la présente invention vont maintenant être détaillés.

Le système de création de tourbillons peut être commandé par un dispositif de pilotage qui est connecté à une unité de contrôle moteur déterminant des points de fonctionnement du moteur pour assurer le pilotage. Le dispositif de pilotage du système de création de tourbillons peut être intégré dans l'unité de contrôle moteur.

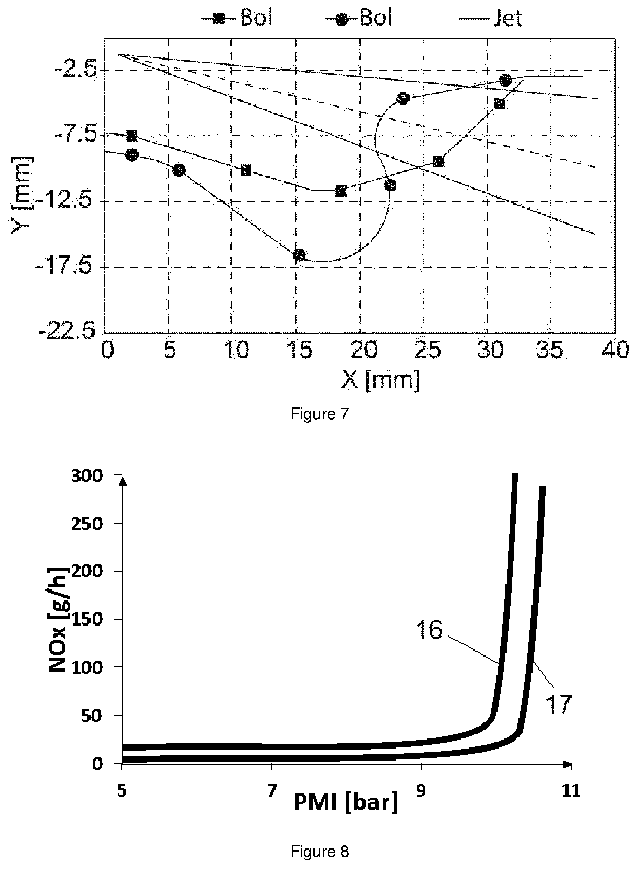

En se référant à toutes les figures, pour un point de fonctionnement du moteur 7 correspondant à un point de charge partielle avec une pression effective moyenne de l'ordre de 8,2 bars et un régime moteur d'environ 2280 tr/min, le moteur comportant un injecteur 3 comprenant 8 trous, le système de création 11 de tourbillons variable peut être piloté pour que le nombre de tourbillon qui lui est associé soit d'environ 4,5. Si l'un de ces paramètres est modifié, les transferts thermiques ou les émissions polluantes vont croître et le rendement du moteur va s'en ressentir. La figure 8 montre par simulation l'écart de performance entre une chambre à combustion dotée d'un piston du type de celui de la figure 1 (courbe 16) et une chambre à combustion dotée d'un piston de l'invention (courbe 17), en faveur de cette dernière.

Pour un point de fonctionnement du moteur 7 correspondant à un point de pleine charge, avec une pression effective moyenne de l'ordre de 20 bars, le système de création 11 de tourbillons variable peut être piloté pour que le nombre de tourbillon soit d'environ 2.

Ainsi, un niveau de tourbillon peut être adapté à chaque point de fonctionnement du moteur avec un tel système de création 11 de tourbillons variable. Lors d'un fonctionnement du moteur en pleine charge, l'objectif principal n'est pas de réduire la consommation de carburant mais d'obtenir le couple moteur maximal en respectant les contraintes de pression maximale dans le cylindre et de température d'échappement maximale. La réduction des transferts thermiques telle que proposée ci-dessus par la présente invention pour les points de charge partielle n'est pas souhaitable car elle conduit à une augmentation de la température d'échappement et donc à une dégradation du couple maximal atteignable.

Lors d'un fonctionnement en pleine charge du moteur, la présente invention propose de réduire le tourbillon en utilisant le ou l'un des systèmes de création de tourbillons à aérodynamique variable disponibles, d'augmenter la pression d'injection pour favoriser l'interaction des jets avec la paroi interne et de revenir à un niveau de transfert thermique d'un moteur Diesel conventionnel. Le nombre de tourbillon optimal pour respecter les contraintes d'architecture moteur, à savoir notamment la pression maximale dans le cylindre et la température maximale d'échappement est alors d'environ 2.

En alternative, s'il est acceptable de réduire le couple maximal atteint par le moteur, ce qui peut être dû à une augmentation de la température d'échappement, il est alors possible de garder un nombre de tourbillon élevé pour les points de forte charge et de conserver une diminution des transferts thermiques sur le piston 2.

Ceci permet de décontraindre thermiquement le piston. Il est alors possible de revoir l'architecture du piston. Les possibilités suivantes peuvent alors être mises en jeu:

- réduction, voire suppression, de la galerie de refroidissement du piston,
- allégement du piston et de l'attelage mobile, ce qui procure des gains en frottement du moteur.

Selon le deuxième mode de réalisation de la présente invention mentionné plus haut, le système de création 11 de tourbillons d'air peut être fixe avec un nombre de tourbillon constant pour tous les points de fonctionnement du moteur 7. Il est alors possible de se passer de l'utilisation d'un système de pilotage de l'aérodynamique interne pilotant le tourbillon.

L'imposition d'un tourbillon fixe d'environ 4 par conception des conduits d'admission ne permettra pas d'atteindre les gains maximaux de consommation sur les points de charge partielle et risque même de dégrader le couple maximum du moteur mais permettra de simplifier le système.

La présente invention permet d'améliorer le compromis NO$_x$/suies. Les NO$_x$ sont principalement maîtrisés par le taux de recirculation des gaz à l'échappement vers l'admission du moteur effectué par un système de recirculation des gaz d'échappement vers l'admission du moteur connu sous l'abréviation de RGE ou sous l'abréviation anglo-saxonne d'EGR. En ce qui concerne la production de suies, cette production dépend principalement du mélange entre l'air, le carburant et les gaz brûlés.

Ainsi, en se référant notamment à la figure 2, la présente invention concerne un groupe moto-propulseur comprenant un système d'admission 8, 8a d'air, un système d'échappement 9 muni d'au moins un élément de dépollution des gaz d'échappement et une ligne de recirculation des gaz d'échappement vers le système d'admission d'air, le groupe moto-propulseur comprenant un tel moteur 7. Ce groupe moto-propulseur peut être turbocompressé ou non. Le groupe moto-propulseur est donc entendu comme comprenant le moteur, son système d'admission d'air et son système d'échappement ainsi que des éléments auxiliaires comme par exemple une ligne RGE.

En se référant plus particulièrement à la figure 1, pour avoir un mélange suffisant et un niveau de suies acceptable, il existe trois possibilités :

- effectuer le mélange en utilisant l'interaction entre les jets 3a et la paroi interne 6 du bol 5, ce qui est une proposition de l'état de la technique,
- effectuer le mélange en utilisant beaucoup de trous d'injection pour l'injecteur 3 et en augmentant la pression d'injection. Le mélange est alors réalisé par l'entraînement d'air au niveau des jets 3a issus de l'injecteur 3,
- effectuer le mélange par l'aérodynamique interne, c'est-à-dire la création de tourbillons, qui doit être suffisamment intense pour « éplucher » les jets 3a de carburant ou avoir une action d'entraînement des jets 3a rencontrant la paroi interne 6 du bol 5.

Par ailleurs, pour limiter les transferts thermiques, et donc augmenter le rendement du moteur 7 et augmenter la température des gaz à l'échappement, il est souhaitable de :

- limiter la surface de la paroi interne 6 du bol 5 en contact avec les gaz brûlés, en particulier la surface du piston 2 car peu d'autres paramètres de fonctionnement sont disponibles concernant la surface de la culasse 10 et la chemise du cylindre 4 entourant la chambre 1 de combustion,
- limiter la température des gaz proches de la paroi interne 6 du bol 5,
- limiter les vitesses des gaz à la paroi interne 6 du bol 5. Il est en effet reconnaissable que l'impact jet/paroi favorise fortement les transferts thermiques. Les jets 3a sont alors en combustion avec de fortes températures et arrivent sur la paroi interne 6 du bol 5 avec de fortes vitesses.

La présente invention a proposé notamment d'utiliser les deux premières propositions précédentes pour réduire les transferts thermiques ainsi qu'augmenter le rendement du moteur 7 et la température des gaz d'échappement.

Une augmentation de la température de l'échappement permet :

- de réduire le temps de mise en action des systèmes de post-traitement, par exemple un catalyseur d'oxydation ou DOC, un système de réduction catalytique sélective connu aussi sous l'abréviation RCS qui correspond à l'abréviation anglo-saxonne de SCR, un filtre à particules, etc.,
- d'améliorer l'efficacité des phases de régénération du filtre à particules, donc de réduire la dégradation de la combustion et la surconsommation de carburant durant ces phases de régénération. Le filtre à particules peut également être éloigné du moteur à iso efficacité de régénération,
- pour un moteur turbocompressé, de réduire les efforts de pompage du moteur, étant donné que plus d'énergie est fournie à la turbine,
- d'augmenter la synergie avec les systèmes de récupération et de valorisation de l'énergie thermique à l'échappement du type boucle de Rankine, des éléments thermoélectriques, un système de récupération thermique à l'échappement, etc.

Quel que soit le nombre de trous de l'injecteur, une conception selon l'état de la technique du piston présentant un bol fermé, comme montré à la figure 1, ne permet pas de monter le niveau de tourbillon car les transferts thermiques vont croître rapidement. En effet, l'augmentation du tourbillon induit une augmentation des vitesses des gaz proches de la paroi interne du bol et donc une augmentation des transferts thermiques.

Cette augmentation des transferts thermiques sera d'autant plus grande que la surface du bol en interaction avec les gaz brûlés est grande. De plus, un bol fermé réduit la distance entre l'injecteur et la paroi interne du bol, favorisant l'interaction entre les jets en combustion et la paroi interne du bol. Les tourbillons vont augmenter les transferts thermiques lors de cette interaction jets/paroi.

La figure 7 montre les jets limites d'injection encadrant les jets sortant d'un trou d'injection avec aussi l'indication d'un jet médian en pointillés. Ces jets rencontrent respectivement un profil de bol fermé et un profil de bol ouvert, le bol ouvert pouvant être utilisé dans les modes de réalisation de la présente invention.

De par sa forme, pour le bol ouvert, les jets doivent parcourir une plus grande distance pour rencontrer la paroi interne en vis-à-vis du bol ouvert que pour un bol fermé qui présente une surface réentrante. Les transferts thermiques et l'échauffement de la paroi interne du bol sont donc moindres dans le cas d'un bol ouvert comparé à un bol fermé, ce qui est avantageux pour la mise en oeuvre de la présente invention.

Comme proposé par la présente invention, afin de gagner sur les transferts thermiques, il est nécessaire de recourir aux bols 5 ouverts tels que présentés aux figures 3 à 6 tout en se référant à la figure 1 pour les références qui ne sont pas présentes aux figures 3 à 6. Les bols 5 ouverts permettent de réduire à la fois la surface du piston 2 et l'interaction entre les jets 3a et la paroi interne 6 du bol 5, ceci en augmentant la distance injecteur/paroi du bol 5.

De plus, cette réduction d'interaction jets/paroi va permettre de réduire le dépôt de carburant sur le piston 2 et donc les émissions de polluants sous forme d'hydrocarbures ou HC lors de démarrages à froid du véhicule automobile.

Ainsi, selon la présente invention, il est procédé à l'élaboration d'un compromis entre le nombre de tourbillon et le nombre de trous d'injection de l'injecteur 3. Il existe un niveau de tourbillon optimal qui dépend au premier ordre du nombre de trous et de la quantité de carburant Diesel injectée dans le moteur. Plus le nombre de trous est important et plus le tourbillon optimal est faible.

Par exemple, pour les plus grands nombres de trous, notamment supérieurs ou égaux à 16, tels que le proposait un état de la technique, le tourbillon optimal pourrait alors être proche de 0. Pour de tels concepts, le tourbillon génère du recouvrement des jets entre eux et conduit à la formation de suies en grande quantité, ce qui est à éviter.

S'il est vrai qu'un faible tourbillon est favorable à une réduction de pertes thermiques dans la chambre 1 et donc améliore le rendement moteur, il est aussi vrai qu'un faible nombre de tourbillon réduit le mélange air et carburant Diesel et promeut la formation des suies. Or, un grand nombre de trous ne peut pas compenser le défaut de mélange et génère de grandes quantités de suies. En conclusion, même si les concepts à fort nombre de trous et bol 5 ouvert permettent de gagner en consommation, ils sont pénalisants relativement au compromis NO$_X$/Suies.

Conformément à la présente invention, pour gagner en transfert thermique tout en maintenant un niveau de suies acceptable, il convient d'utiliser un bol 5 ouvert avec un nombre de trous restreint, avantageusement entre 6 et 9 et un nombre de tourbillon augmenté par rapport à l'état de la technique précédemment mentionné, avantageusement entre 2 et 6.

En effet, le bol 5 ouvert offre une surface d'échange avec les gaz brûlés réduite qui limite l'effet négatif du tourbillon sur les transferts thermiques. Le tourbillon et le bol 5 ouvert permettent surtout de limiter très fortement l'impact des jets de l'injecteur 3 avec la paroi 6 interne du bol et de limiter ainsi les transferts thermiques durant la combustion.

Pour les premier et deuxième modes de réalisation du moteur selon l'invention, en se référant à toutes les figures, un paramètre supplémentaire pour piloter l'impact entre les jets 3a et la paroi 6 interne du bol 5 peut être la pression d'injection. Une augmentation de la pression d'injection va favoriser la pulvérisation du carburant et donc l'entraînement d'air en augmentant la vitesse de mélange entre l'air et le carburant Diesel. L'augmentation de cette pression d'injection va dans le sens d'une réduction de la durée de combustion et d'une diminution des suies, la réduction de la vitesse de combustion étant bénéfique pour le rendement du moteur.

A contrario, une augmentation de la pression d'injection va augmenter la pénétration des jets 3a dans la chambre 1 de combustion et l'interaction des jets 3a en combustion avec la paroi 6 interne du bol 5 ouvert, augmentant ainsi les transferts thermiques et réduisant l'efficacité du moteur. Une augmentation de la pression d'injection peut également augmenter le bruit.

Il s'ensuit que la pression d'injection doit être augmentée jusqu'à ce que les jets entrent en contact avec la paroi interne seulement de manière limitée et n'échauffent pas trop la paroi 6 interne du bol 5 ouvert afin que les transferts thermiques n'augmentent pas trop significativement. Il existe donc une pression d'injection optimale qui permet de maximiser le mélange air/carburant et la vitesse de combustion, ce qui minimise la formation de suies et limite les transferts thermiques dus à l'impact des jets 3a sur la paroi interne 6 du bol 5 du piston 2.

Il est considéré qu'il faut limiter la surface de zones du bol ouvert en vis-à-vis des jets qui atteignent ou dépassent une température avantageusement une température de 1.500°K, pour les raisons précédemment mentionnées. Ces zones sont les zones impactées par les jets sortant de l'injecteur.

En se référant aux figures 1 et 7 pour les références, la figure 6 montre un bol 5 ouvert avec une paroi interne 6 dont des zones 14, 15 sont susceptibles d'être impactées par des jets 3a de carburant, ces zones formant un bandeau s'étendant sur toute une portion de la périphérie de la paroi interne 6.

Parmi ces zones, il existe des zones fortement impactées, avec une de ces zones référencée 15 à la figure 6, dont la température dépasse la température avantageusement 1.500°K, et des zones faiblement impactées, avec une de ces zones référencée 14 à la figure 6, dont la température ne dépasse pas la température avantageusement 1.500°K.

Les zones fortement impactées 15 et atteignant 1.500°K et les zones faiblement impactées 14 n'atteignant pas 1.500°K sont disposées de manière alternée sur la paroi interne 6 du bol 5 pouvant être impactée. Les zones fortement impactées 15 sont sous la forme de ronds et les zones faiblement impactées 14 entourent les ronds successifs des zones fortement impactées 15.

Il peut être défini une surface totale de la paroi 6 pouvant être impactée qui comprend la surface des zones 14 et 15. Ainsi, dans un compromis selon un mode de réalisation de la présente invention, la pression d'injection pour chaque trou de l'injecteur peut être supérieure à la pression courante d'injection, de l'ordre de 1.800 bars, tout en étant inférieure ou égale à une pression maximale pour laquelle la surface des zones 15 de la paroi interne du bol impactées par les jets et atteignant une température de l'ordre de 1.500°K est augmentée de 20 à 30% par rapport à la surface des zones atteignant la même température de l'ordre de 1.500°K pour une pression courante d'injection.

Avec ce compromis, on obtient les avantages d'une augmentation de la pression d'injection mentionnés ci-dessus tout en maintenant dans une limite acceptable l'augmentation des transferts thermiques engendrée par cette augmentation de pression.

Il existe cependant d'autres solutions pour réduire les transferts thermiques des moteurs thermiques pouvant être utilisées en combinaison avec les caractéristiques du moteur selon la présente invention. Il peut être utilisé des matériaux isolants pour rendre sans transfert thermique partiellement la chambre de combustion.

Ces procédés d'isolation sont adaptés pour réduire les pertes thermiques mais très pénalisants sur la formation des $NO_x$ et le remplissage du moteur. En effet, avec une chambre de combustion rendue adiabatique ou sans transfert thermique, la température moyenne dans la chambre de combustion augmente, ce qui génère une forte augmentation de la quantité de $NO_x$ produit dans la chambre.

D'autre part, il est possible que l'utilisation appropriée de l'air dans la chambre de combustion puisse produire les mêmes effets que ceux précédemment décrits. Il peut aussi être utilisé notamment des injecteurs non conventionnels, par exemple sans être limitatif :

- un injecteur présentant des trous d'injection avec des formes non conventionnelles, comme des formes oblongues, des fentes, etc.,
- un injecteur avec plusieurs rangées de trous, avec des tailles ou formes différentes pour des rangées différentes de trous, etc.

Selon un autre mode de réalisation de la présente invention, pouvant être utilisé avec les deux autres modes précédemment décrits, l'injecteur comprend un moyen d'obturation ou d'ouverture d'au moins un trou d'injection le rendant inopérant ou actif à des points spécifiques de fonctionnement du moteur. Il est ainsi possible de changer lors des points de fonctionnement du moteur le nombre de trous d'injection en service.

Il n'existe pas de solution équivalente connue à la présente invention permettant d'atteindre les mêmes prestations, par exemple en ce qui concerne le gain en $CO_2$, le gain sur la température d'échappement, le gain sur le compromis $NO_x$/suies.

La présente invention ne requiert que des modifications peu intrusives sur le moteur et permet d'améliorer significativement la consommation de carburant, avec un potentiel de 3 à 6% à un même niveau de création de polluants et pour une même architecture moteur. La présente invention peut être aisément adaptée à des systèmes d'injection conventionnels moyennant une modification de la forme du piston et l'utilisation d'un système de création de tourbillons, notamment à aérodynamique variable.

Les avantages principaux sont un gain en consommation de carburant, une mise en action plus rapide de l'élément ou des éléments de dépollution présents dans le système d'échappement du moteur, un coût prix de revient foncier contenu avec principalement l'ajout d'un système de créations de tourbillons, notamment à aérodynamique variable, de prix réduit.

L'invention n'est nullement limitée aux modes de réalisation décrits et illustrés qui n'ont été donnés qu'à titre d'exemples.

## Revendications

1. Moteur (7) à combustion interne Diesel comprenant au moins une chambre (1) de combustion délimitée par une culasse (10), un cylindre (4) et un piston (2), la culasse (10) portant une entrée d'admission d'air et un injecteur (3) avec au moins deux trous injectant chacun un jet (3a) de carburant Diesel dans la chambre (1), le piston (2) étant mobile en translation à l'intérieur du cylindre (4) le long d'un axe central de la chambre (1) pour l'entraînement en rotation d'un vilebrequin et portant sur une face tournée vers l'injecteur (3) une cavité centrale formant un bol (5), le moteur (7) étant muni d'un système de création (11) de tourbillons d'air dans la chambre (1), un nombre de tourbillon étant défini par le rapport d'une vitesse de rotation de l'air autour de l'axe central de la chambre (1) sur une vitesse de rotation du vilebrequin, **caractérisé en ce que** :

   - le bol (5) est un bol ouvert avec une paroi interne (6) se décomposant en une première partie (6') formant le fond du bol et une seconde partie (6") adjacente au fond du bol et formant une paroi latérale qui s'étend du fond du bol à l'ouverture (5a) du bol (5) du piston (2), cette seconde partie (6") élargissant progressivement la cavité à mesure que l'on se rapproche de l'ouverture (5a) du bol (5),

- le nombre de tourbillon est compris entre 2 et 6,
- l'injecteur (3) comprend entre 6 et 9 trous.

2. Moteur (7) selon la revendication 1, **caractérisé en ce que** le rapport de la profondeur du bol sur le diamètre du piston est compris entre 0,1 et 0,15, de préférence entre 0,11 et 0,14.

3. Moteur (7) selon la revendication 1 ou la revendication 2, **caractérisé en ce que** le rapport du diamètre de l'ouverture (5a) du bol (5) sur le diamètre du piston (2) est compris entre 0,8 et 0,95, de préférence entre 0,88 et 0,9.

4. Moteur (7) selon l'une des revendications 1 à 3, **caractérisé en ce que** la seconde partie (6") de la paroi interne 6 comprend, en partant du fond du bol (5) une première pente droite (P1) suivie d'une seconde pente droite (P2).

5. Moteur selon la revendication 4, **caractérisé en ce que** la première pente droite (P1) est comprise entre 19° et 48° tandis que la seconde pente droite (P2) est comprise entre 23° et 32°.

6. Moteur selon l'une quelconque des revendications précédentes, **caractérisé en ce que** le fond du bol comprend un téton (5b) central.

7. Moteur (7) selon l'une quelconque des revendications précédentes, **caractérisé en ce que** le système de création (11) de tourbillons est choisi parmi les systèmes suivants pris individuellement ou en combinaison:

    - un système comportant un ou des volets obturant tout ou une partie d'un conduit d'admission d'air,
    - un système comportant un double répartiteur d'air et au moins un volet obturant l'un des deux répartiteurs,
    - un système utilisant la distribution moteur avec des première et seconde soupapes d'admission (12, 12a) et une soupape d'échappement (13) dans ladite au moins une chambre (1) de combustion, un premier arbre à cames portant la première soupape d'admission (12) et la soupape d'échappement (13) et un second arbre à cames portant la seconde soupape d'admission (12a) avec des moyens de réglage de la commande d'ouverture et/ou de fermeture de la première soupape d'admission (12) et de la soupape d'échappement (13) portées par le premier arbre à cames par rapport à la commande d'ouverture et/ou de fermeture de la seconde soupape d'admission (12a) portée par le second arbre à cames.

8. Moteur (7) selon l'une quelconque des revendications précédentes, **caractérisé en ce que** le système de création (11) de tourbillons d'air est un système variable comprenant un dispositif de pilotage créant des tourbillons d'air spécifiques à des points de fonctionnement du moteur (7).

9. Moteur (7) selon la revendication 8, **caractérisé en ce que** le dispositif de pilotage est connecté à une unité de contrôle moteur pour la détermination des points de fonctionnement du moteur.

10. Moteur (7) selon la revendication 8 ou la revendication 9, **caractérisé en ce que** pour un point de fonctionnement du moteur (7) correspondant à un point de charge partielle avec une pression effective moyenne de l'ordre de 8,2 bars et un régime moteur aux environs de 2280 tr/min avec un injecteur (3) comprenant 8 trous, le nombre de tourbillon créé par le système de création (11) de tourbillons variable est d'environ 4,5.

11. Moteur (7) selon la revendication 10, **caractérisé en ce que** pour un point de fonctionnement du moteur (7) correspondant à un point de pleine charge, avec une pression effective moyenne de l'ordre de 20 bars, le nombre de tourbillon est d'environ 2.

12. Moteur (7) selon l'une quelconque des revendications précédentes, **caractérisé en ce qu'**il comprend un moyen d'obturation ou d'ouverture d'au moins un trou d'injection le rendant inopérant ou actif à des points spécifiques de fonctionnement du moteur (7).

13. Moteur (7) selon l'une quelconque des revendications 1 à 6, **caractérisé en ce que** le système de création (11) de tourbillons d'air est fixe avec un nombre de tourbillon constant pour tous les points de fonctionnement du moteur (7), ce nombre étant de l'ordre de 4.

14. Moteur (7) selon l'une quelconque des revendications précédentes, **caractérisé en ce que** la pression d'injection pour chaque trou de l'injecteur peut être supérieure à la pression courante d'injection, de l'ordre de 1800 bars, tout en étant inférieure ou égale à une pression maximale pour laquelle la surface des zones (15) de la paroi interne du bol impactées par les jets et atteignant une température de l'ordre de 1500°K est augmentée de 20 à 30% par rapport à la surface des zones du bol atteignant la même température de l'ordre de 1500°K pour une pression courante d'injection.

15. Groupe moto-propulseur comprenant un système d'admission (8, 8a) d'air, un système d'échappement (9) muni d'au moins un élément de dépollution des gaz d'échappement et une ligne de recirculation des gaz d'échappement vers le système d'admission d'air, **caractérisé en ce qu'**il comprend un moteur (7) selon l'une quelconque des revendications précédentes.

Figure 1

Figure 2

5a    5b    Z    6a

6    5    6′    6″

Figure 3

Z
6    5b    6a    6a

P2

6″    6′    5    P1

Figure 4

5b

6
5

Figure 5

6    15    14

5

Figure 6

Figure 7

Figure 8

Europäisches
Patentamt

European
Patent Office

Office européen
des brevets

**RAPPORT DE RECHERCHE EUROPEENNE**

Numéro de la demande

EP 16 17 6898

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2007 053888 A1 (VOLKSWAGEN AG [DE]) 14 mai 2009 (2009-05-14) * abrégé * * figures 1-9 * * revendications 1, 2 * * alinéa [0001] - alinéa [0003] * * alinéa [0011] - alinéa [0013] * * alinéa [0070] - alinéa [0107] * ----- | 1-15 | INV. F02B23/06 F02F3/26 F02B31/08 ADD. F02B3/06 F02B31/00 F02D41/00 |
| X | DE 10 2007 053966 A1 (VOLKSWAGEN AG [DE]) 14 mai 2009 (2009-05-14) * abrégé * * figures 1-9 * * alinéas [0001] - [0014] * * alinéa [0049] * * alinéa [0068] - alinéa [0103] * ----- | 1-15 | |
| X | EP 0 235 288 A1 (MITSUBISHI MOTORS CORP [JP]) 9 septembre 1987 (1987-09-09) * abrégé * * figures 1-52 * * page 1 - page 2 * * page 11 - page 22 * ----- | 1-13 | DOMAINES TECHNIQUES RECHERCHES (IPC) |
| A | EP 2 500 543 A1 (TOYOTA MOTOR CO LTD [JP]; TOYOTA JIDOSHOKKI KK [JP]) 19 septembre 2012 (2012-09-19) * abrégé * * figures 1-4, 7-16 * * alinéa [0027] - alinéa [0043] * ----- -/-- | 1,3-6 | F02B F02F F02D F02M |

Le présent rapport a été établi pour toutes les revendications

| Lieu de la recherche | Date d'achèvement de la recherche | Examinateur |
|---|---|---|
| Munich | 26 octobre 2016 | Juvenelle, Cyril |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 16 17 6898

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 538 042 A1 (YANMAR CO LTD [JP]) 26 décembre 2012 (2012-12-26) * abrégé * * figures 1-8 * * revendications 1, 2 * * alinéa [0001] * * alinéa [0006] - alinéa [0009] * * alinéa [0013] - alinéa [0024] * * alinéa [0036] - alinéa [0041] * * alinéa [0053] - alinéa [0055] * ----- | 1,4-7 | |
| A | WO 2010/081491 A1 (FEV MOTORENTECH GMBH [DE]; LAMPING MATTHIAS [DE]) 22 juillet 2010 (2010-07-22) * abrégé * * figures 1-5 * * page 3 - page 13 * ----- | 1,4-7 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 26 octobre 2016 | Juvenelle, Cyril |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 16 17 6898

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-10-2016

| Document brevet cité au rapport de recherche | Date de publication | Membre(s) de la famille de brevet(s) | Date de publication |
|---|---|---|---|
| DE 102007053888 A1 | 14-05-2009 | DE 102007053888 A1<br>EP 2103790 A2 | 14-05-2009<br>23-09-2009 |
| DE 102007053966 A1 | 14-05-2009 | AUCUN | |
| EP 0235288 A1 | 09-09-1987 | AU 579185 B2<br>AU 4773485 A<br>EP 0235288 A1<br>GB 2188983 A<br>US 4834035 A<br>US 4909210 A<br>WO 8701160 A1 | 17-11-1988<br>10-03-1987<br>09-09-1987<br>14-10-1987<br>30-05-1989<br>20-03-1990<br>26-02-1987 |
| EP 2500543 A1 | 19-09-2012 | EP 2500543 A1<br>WO 2011059059 A1 | 19-09-2012<br>19-05-2011 |
| EP 2538042 A1 | 26-12-2012 | CN 102762819 A<br>EP 2538042 A1<br>JP 5237314 B2<br>JP 2011169281 A<br>KR 20120125640 A<br>WO 2011102269 A1 | 31-10-2012<br>26-12-2012<br>17-07-2013<br>01-09-2011<br>16-11-2012<br>25-08-2011 |
| WO 2010081491 A1 | 22-07-2010 | DE 112009003869 A5<br>WO 2010081491 A1 | 24-05-2012<br>22-07-2010 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2926849 A